# EUROPEAN PATENT APPLICATION

(11) **EP 1 477 871 A2**
(43) Date of publication of application: **17.11.2004**
(21) Application number: 04252805.9
(22) Date of filing: 14.05.2004
(51) Int. Cl.: G05B 19/418

(54) **Field maintenance tool with improved device description communication and storage**

(30) Priority: 16.05.2003 US 440047
(71) Applicant: Fisher-Rosemount Systems, Inc., Austin, Texas 78754 (US)
(72) Inventor: Opheim, Gregory J., St. Paul Minnesota 55105 (US); Kantzes, Christopher P., Minneapolis Minnesota 55409 (US); Horgen, Benjamin P., Rochester Minnesota 55906 (US); Zielinski, Martin, Chanhassen Minnesota 55317 (US)
(74) Representative: Cross, Rupert Edward Blount

(57) **Abstract**

Improved methods for transferring Device Description data to handheld field maintenance tools are provided. Aspects of the invention include transmitting the Device Description information wirelessly, such as through an infrared data access port, to the handheld field maintenance tool. Embodiments of the invention also include storing and maintaining two or more Device Description binary files within the handheld field maintenance tool. In this manner, updates can be transferred to the handheld field maintenance device, preferably wirelessly, in significantly less time than would be required if all Device Description binary information were in a single file.

## Description

### BACKGROUND OF THE INVENTION

Intrinsically safe field maintenance tools are known. Such tools are highly useful in the process control and measurement industry to allow technicians to conveniently communicate with and/or interrogate field devices in a given process installation. Examples of such process installations include petroleum, pharmaceutical, chemical, pulp and other processing installations. In such installations, the process control and measurement network may include tens or even hundreds of various field devices which periodically require maintenance to ensure that such devices are functioning properly and/or calibrated. Moreover, when one or more errors in the process control and measurement installation is detected, the use of an intrinsically safe handheld field maintenance tool allows technicians to quickly diagnose such errors in the field.

One such device is sold under the trade designation Model 275 HART Communicator available from Rosemount Inc., of Eden Prairie, Minnesota. The Model 275 provides a host of important functions and capabilities and generally allows highly effective field maintenance. However, the Model 275 does not currently support, communication with non-HART (Highway Addressable Remote Transducer) devices.

The HART protocol has a hybrid physical layer consisting of digital communication signals superimposed on the standard 4-20 mA analog signal. The data transmission rate is approximately 1.2 Kbits/SEC. HART communication is one of the primary communication protocols in process industries.

Another major process industry communication protocol is known as the FOUNDATION™ fieldbus communication protocol. This protocol is based on an ISA standard (ISA-S50.01-1992, promulgated by the Instrument Society of America in 1992). A practical implementation was specified by the fieldbus foundation (FF) . FOUNDATION™ fieldbus is an all-digital communication protocol with a transmission rate of approximately 31.25 Kbits/SEC.

In the past, in order to provide a handheld communicator, such as the Model 275, with the requisite information to interact with the various field devices with which it may be coupled, the Device Descriptions of such devices were compiled from one or more Device Description sources into a single relatively large Device Description binary file. The size of this Device Description binary file was generally limited to a little over 11 megabytes in size due to addressing constraints imposed by prior art processors. The binary file itself was uploaded from an external source into the handheld communicator to enable the handheld communicator to interact with the required process devices. In the event that any changes were desired to be made to the Device Descriptions, the entire Device Description binary would need to be recompiled and uploaded. This method, while proving satisfactory in the past, creates drawbacks for modern intrinsically safe field maintenance tools. These drawbacks will be illustrated later in the Specification as embodiments of the present invention are explained.

### SUMMARY OF THE INVENTION

Improved methods for transferring Device Description data to handheld field maintenance tools are provided. Aspects of the invention include transmitting the Device Description information wirelessly, such as through an infrared data access port, to the handheld field maintenance tool. Embodiments of the invention also include storing and maintaining two or more Device Description binary files within the handheld field maintenance tool. In this manner, updates can be transferred to the handheld field maintenance device, preferably wirelessly, in significantly less time than would be required if all Device Description binary information were in a single file.

### BRIEF DESCRIPTION OF THE DRAWINGS

Fig. 1 illustrates a multi-drop wiring configuration.
Figs. 2A and 2B illustrate ways in which an intrinsically safe field maintenance tool may be connected to a process device.
Fig. 3 is a diagrammatic view of field maintenance tool in accordance with an embodiment of the present invention.
Fig. 4 is a diagrammatic view of Device Description binary file generation.
Figs. 5A and 5B illustrate Device Description binary file generation and maintenance in accordance with an embodiment of the present invention.

### DETAILED DESCRIPTION OF THE PREFERRED EMBODIMENTS

An improved field maintenance tool is used to maintain both two-wire and four-wire (i.e. external power) field devices using one or more process measurement and control protocols. Preferably, both configuration and calibration are supported via DDL technology. DDL technology is generally known and additional reading regarding Device Description Language can be found in U.S. Patent 5,960,214 to Sharp, Jr. et al.

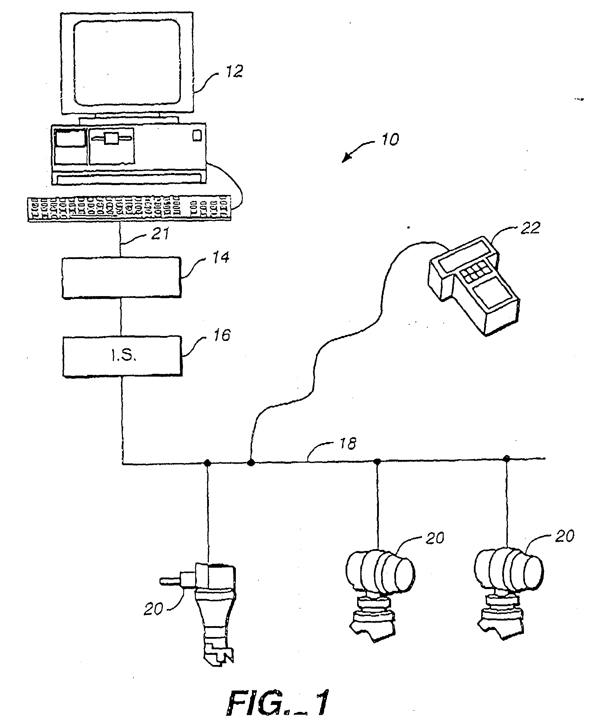

Fig. 1 illustrates an exemplary system in which embodiments of the present invention are useful. System 10 includes controller 12, I/O and control sub-system 14, intrinsic safety (IS) barrier 16, process communication loop 18 and field devices 20. Controller 12 is coupled to I/0 and control sub-system 14 via link 21 which can be any suitable link such as a local area network (LAN) operating in accordance with Ethernet signaling protocols or any other suitable protocol. I/O and control sub-system 14 is coupled to intrinsic safety barrier 16 which in turn is coupled to process communication loop 18 to allow data communication between loop 18 and I/O and control sub-system 14 in a manner that limits energy passing therethrough.

In this illustration, process communication or process control loop 18 is a FOUNDATION™ fieldbus process communication loop and is coupled to field devices 20, which are shown coupled arranged in a multi-drop configuration. An alternative process communication loop (not shown) is an HART® process communication loop. Fig. 1 illustrates a multi-drop wiring configuration that vastly simplifies system wiring compared to other topologies such as the star topology. Multi-drop HART® configurations support a maximum of 15 devices, while multi-drop FOUNDATION™ Fieldbus configurations support a maximum of 32 devices.

Intrinsically safe field maintenance tool 22 is coupled to loop 18 as illustrated in Fig. 1. when coupled to a process control loop as shown, device 22 can perform a number of the communication and diagnostic functions. Device 22 can couple to and interact with HART process communication loops in much the same way the presently available HART Model 275 Communicator can.

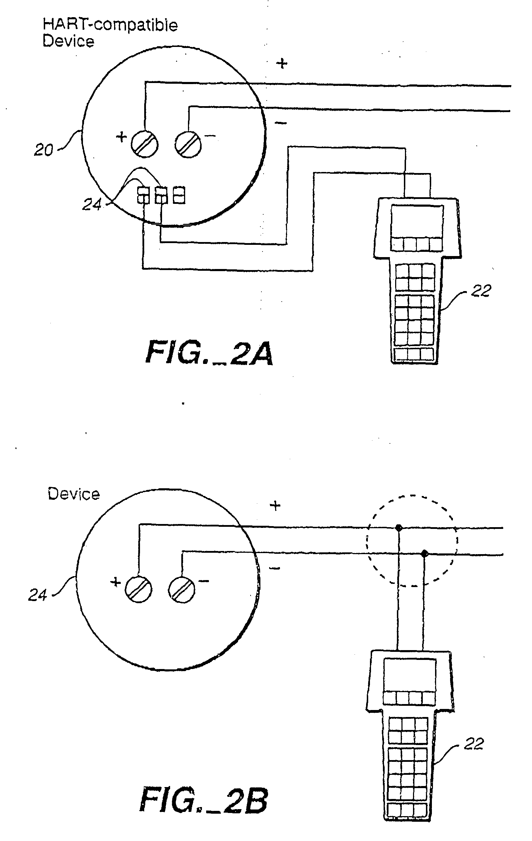

Fig. 2A illustrates device 22 coupled to HART-compatible device 20 via terminals 24. Alternately, device 22 can communicate with other devices on the process instrumentation communication loop, such as device 24 via the loop itself, as indicated in Fig. 2B.

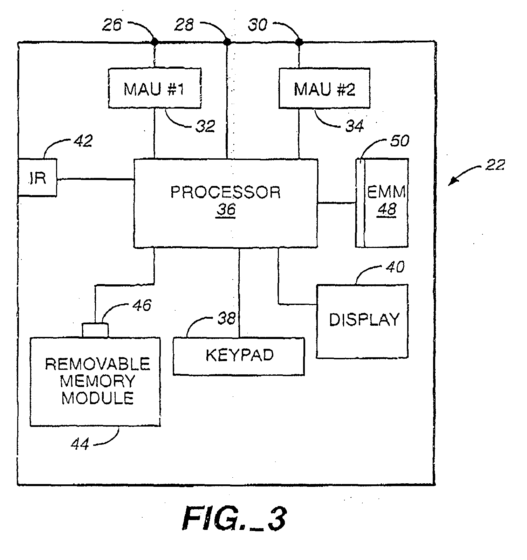

Fig. 3 is a diagrammatic view of field maintenance tool 22 in accordance with embodiments of the present invention. As illustrated, device 22 preferably includes three communication terminals 26, 28 and 30 which facilitate coupling device 22 to process communication loops and/or devices in accordance with at least two different process industry standard protocols. For example, when device 22 is to be coupled to a loop of a first process industry standard protocol, such coupling is effected using terminal 26 and common terminal 28. Accordingly, the connection then is made via media access unit 32 which is configured to interact upon the process communication loop in accordance with the first industry standard protocol. Additionally, when device 22 is to be coupled to a process and control measurement loop that operates in accordance with a second industry standard protocol, such connection is made via common terminal 28 and terminal 30. Thus, the connection is effected via the second media access unit 34 which is configured to interact upon the process communication loop in accordance with the second industry standard protocol. Both media access units 32 and 34 are coupled to processor 36 which receives data from one of the media access units and interprets that data accordingly.

In accordance with embodiments of the present invention, device 22 includes additional hardware enhancements that facilitate increased functionality over that generally available in the prior art. Specifically, device 22 includes infrared data access port 42 which is coupled to processor 36 to allow device 22 to transfer information to and from a separate device using infrared wireless communication. One advantageous use of port 42 is for transferring and/or updating Device Descriptions stored in one or more memories of device 22. Thus, the separate device such as computer 12, can obtain a new Device Description from floppy disk, CD ROM, or the internet and wirelessly transfer the new Device Description to device 22.

Processor 36 is preferably a commercially available microprocessor such as those found in modern handheld computing products. One example of such a processor is available from Texas Instruments under the trade designation OMAP1510 which is currently available in the model Tungsten handheld computing device from Palm. Processor 36 differs from prior processors in intrinsically safe field maintenance tools in a number of respects. One difference is that processor 36 supports a substantially larger addressable memory space. Embodiments of the present invention preferably employ memory capacities that substantially exceed that of the prior art. For example, random access memory modules of handheld intrinsically safe field maintenance tools in accordance with embodiments of the present invention can be 512 megabytes or more. This allows substantially more memory capacity for applications, program and/or device data, as well as Device Descriptions.

Embodiments of the present invention also include a method and system that facilitate the fast and efficient interchange of Device Description information. Further, embodiments of the present invention are practicable with both custom-designed handheld field maintenance tools as well as commercially available handheld computing devices. One feature of such devices is infrared data access port 42. As set forth above, the provision of port 42 facilitates wireless infrared communication with the handheld field maintenance tool. This communication preferably includes Device Description information. However, communication through port 42 can be used to transfer any suitable data, such as field device configuration data, simple text files, handheld tool-specific applications and/or other applications. Infrared communication using port 42 allows the handheld field maintenance tool to send and receive information from any device that has another suitable infrared transceiver. Such devices can include desktop computers, mobile computing devices, or other intrinsically safe handheld field maintenance tools. For example, two such intrinsically safe field maintenance tools can be physically placed in such a way that their respective infrared ports are aligned. Then, each tool is placed into a special mode where they communicate via ports 42 with one another. In this case, one such handheld tool is chosen by the technician as the master unit, from which the technician then initiates tool-to-tool communication.

This information sharing among intrinsically safe field maintenance tools is facilitated with an application set composed of compiled code executing on each tool. Utilizing the combination of the application set and native operating system support for the infrared port, the tools communication applications communicate with each other to resolve compatibility issues and determine which information, if any, can be shared between them. The master unit (the one which initiated the infrared communication) will then allow the technician to choose which of the available information should be shared between the tools. The field maintenance tools will then transfer the information back and forth via infrared ports 42 as necessary to satisfy the technician's request.

Data access speeds of current commercially available infrared data access ports, such as port 42, are relatively limited. For example, currently infrared data access port 42 has a data access speed of approximately 6 kilobytes per second. This data access speed can create undesirable delays when uploading binary Device Description information. For example, the single 11 megabyte Device Description binary file used in the prior art would require over 30 minutes to pass through data access port 42 at a 6 kilobyte per second, data access speed. This limitation becomes more pronounced as the substantially larger memory capacity of the handheld field maintenance tool is used to contain ever larger Device Description binaries. Given that technician time is extremely valuable, it is important that the amount of time that that technician must wait for Device Description information to upload from a computer, or another handheld device via wireless data access port 42 be minimized.

In the past, ROM-based memory solutions were employed to move updated Device Descriptions for field devices developed after the release data of the handheld field maintenance tool to the tool. The problem with ROM-based memory solutions was that they require programming and often the handheld tool cannot program (burn or otherwise affect) the ROM itself. This makes it impossible to update the tool with newly developed Device Descriptions without the addition of a ROM programming function, and the cost associated therewith.

In accordance with an embodiment of the present invention, a solution is achieved by using the application set, composed of compiled code executing on each of the computing devices, to effect the transfer. Preferably, the operating system of the handheld field maintenance tool provides intrinsic support for data access port 42 and the communication applications then communicate with each other to arbitrate compatibility issues and subsequently update the handheld field maintenance tool with newly developed Device Descriptions for field devices. Preferably, this process is enhanced in such a way that such updates and/or additions can be effected with a relative minimum of upload time. Accordingly, the practice of the prior art encoding all of the Device Descriptions into a single large binary file is discarded. Instead, a plurality of stand-alone Device Description binary files are maintained within the handheld field maintenance tool. Thus, instead of having to transfer a file in excess of 11 megabytes through the rate-limited data access port 42, a stand-alone Device Description binary is directed solely to the update and can be transferred in substantially less time. For example, a typical stand-alone Device Description binary in accordance with embodiments of the present invention is on the order of approximately 200-300 kilobytes. These files are transferable through data access port 42 in less than 1 minute. Moreover, as the total number of updates or data related to Device Descriptions increases, the number of the individual Device Description binaries resident within the handheld device increases, while the time required to affect such updates does not. Thus, for example, if the total size of all Device Description binaries were to grow to say 20 megabytes, the update time would still be approximately less than 1 minute since a stand-alone Device Description binary update file is all that is required for an update. In contrast, the prior art approach to updating Device Description information would require almost 60 minutes thus rendering such updates increasingly undesirable as time goes on.

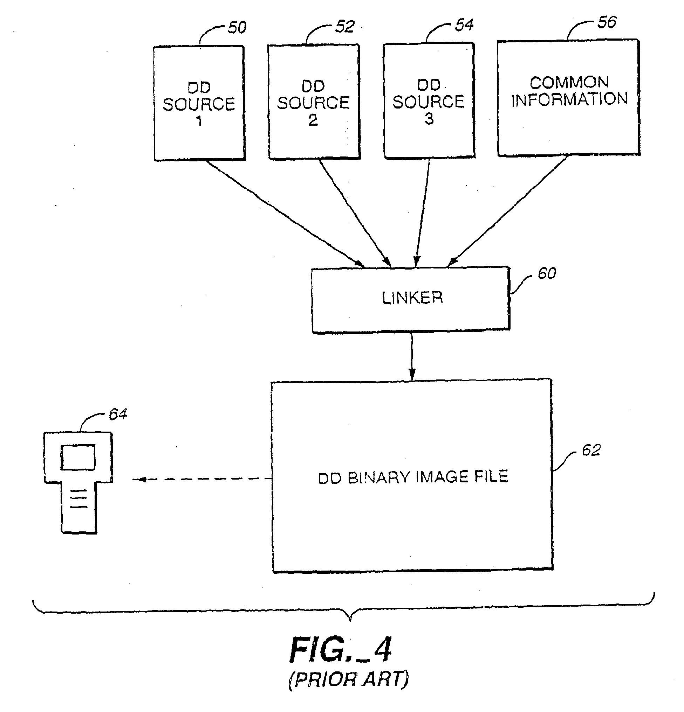

Fig. 4 is an illustration of the process of creating a Device Description binary image file. Individual Device Description source files 50, 52, 54 are provided along with common information 56 to a software module known in the art as a linker 60 which functions essentially as a compiler. Linker 60 generates as an output a single Device Description binary image file 62 which is then uploaded to handheld device 64. Thus, in the prior art, each handheld device contained a single Device Description binary image file.

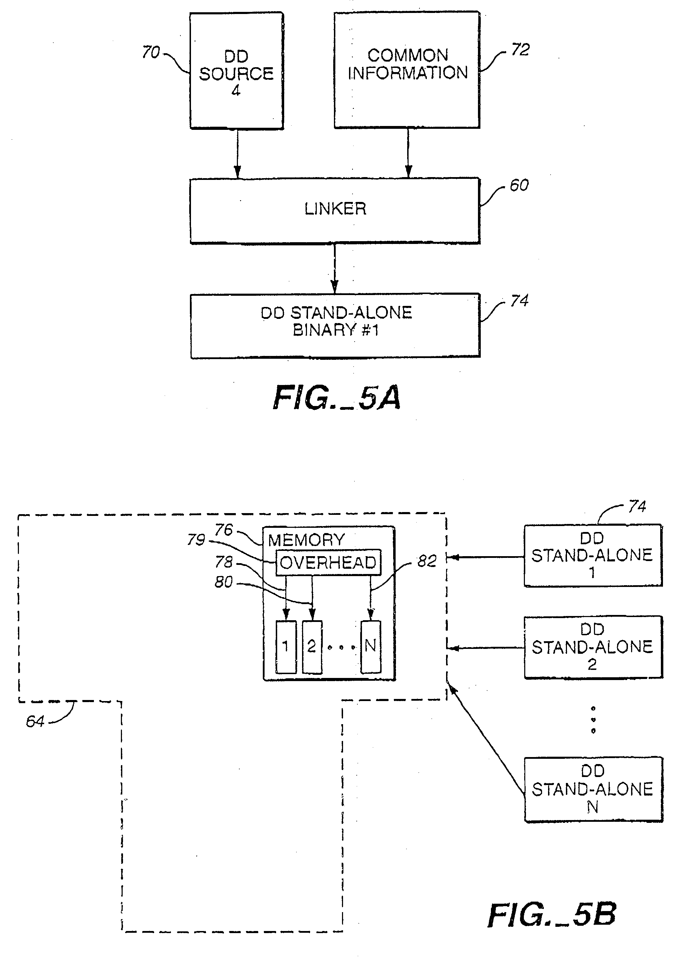

Fig. 5A illustrates a process of creating a stand-alone Device Description binary file. Exemplary DD source file 70 and common information 72 are provided to linker module 60 much in the same manner as set forth above with respect to Fig. 4. Linker 60 generates Device Description stand-alone binary file 74. The term "stand-alone" indicates that the Device Description binary file is complete in and of itself in that all common information required for use of the Device Description is provided within the file. Note, more than one Device Description source file can be provided to the linker such that a given stand-alone binary file may include binary Device Description data with respect to more than one Device Description. In such case, the generation of binary Device Description data illustrated with respect to Fig 5A is exactly the same as illustrated with respect to Fig. 4. However, a significant distinction between embodiments of the present invention and the prior art is illustrated with respect to Fig. 5B.

Fig. 5B illustrates handheld tool 64 including memory 76 which may comprise, for example, removable memory module 44 and/or expansion memory module 48 (described in greater detail below). The plurality of Device Description binary files are conveyed, preferably via infrared data access port 42, to memory 76 from an external device such as a desktop computer, a mobile computing device, or another field maintenance tool. Memory 76 also includes one or more data structures, or overhead 79, that maintain pointers, or other indications to each stand-alone Device Description binary file, 80 and 82. Preferably, each stand-alone binary Device Description file includes a unique identifier for the field device to which it is directed as well as the version number of the Device Description. Thus, if an update is issued by a given device manufacturer for a specific field device, that single Device Description can be compiled with a linker and uploaded to the handheld field maintenance tool. Preferably, handheld field maintenance tool 64 includes suitable software that identifies, or otherwise recognizes, a later revision number for an already existing Device Description and overwrites the existing Device Description with the new Device Description. In the event that the old stand-alone Device Description cannot be overwritten, (for example if the obsolete Device Description includes one or more other Device Descriptions that are not outdated) a record is generated to ensure that when a field device that is the subject of the update is encountered that the updated Device Description is used. One way to accomplish this is by using a table correlating field devices with stand-alone binary Device Descriptions.

The following description provides details of the memory modules 42 and 44 of device 22 in accordance with embodiments of the present invention. Removable memory module 44 is removably coupled to processor 36 via port/interface 46. Removable memory module 44 is adapted to store software applications that can be executed instead of primary applications on processor 36. For example, module 44 may contain applications that use the HART or FOUNDATION™ fieldbus communication port, for example, to provide a comprehensive diagnostic for a given process device. Additionally, module 44 may store software applications that aid in the calibration or configuration of specific devices. Module 44 may also store a software image for a new or updated primary device application that can subsequently be flashed into the memory of device 36 to enable execution of the updated application. Further still, module 44 provides removable memory storage for the configuration of the device allowing a field maintenance technician to acquire a relatively substantial amount of device data and conveniently store such data for transfer to another device by simply removing module 44.

Preferably, module 44 is adapted to be replaceable in hazardous areas in a process plant. Thus, it is preferred that module 44 comply with intrinsic safety requirements set forth in: APPROVAL STANDARD INTRINSICALLY SAFE APPARATUS AND ASSOCIATED APPARATUS FOR USE IN CLASS I, II AND III, DIVISION 1 HAZARDOUS (CLASSIFIED) LOCATIONS, CLASS NUMBER 2610, promulgated by Factory Mutual Research October, 1988. Examples of specific structural adaptations for memory module 44 and/or interface 46 to facilitate compliance include specifying the operating voltage level of memory module 44 to be sufficiently low that stored energy within module 44 cannot generate a source of ignition. Additionally, module 44 may include current limiting circuitry to ensure that in the event that specific terminals on module 44 are shorted, that the discharge energy is sufficiently low that ignition is inhibited. Finally, interface 44 may include physical characteristics that are specifically designed to prevent exposure of electrical contacts on. memory module 44 to an external environment while simultaneously allowing suitable interface contacts to make electrical contact with module 44. For example, module 44 may include an over-modeling that can be pierced or otherwise displaced by coupling module 44 to interface 46.

Device 22 also preferably includes expansion memory module 48 coupled to processor 36 via connector 50 which is preferably disposed on the main board of device 22. Expansion memory module 48 may contain Device Descriptions of first and second industry standard protocols. Module 44 may also contain license code that will determine the functionality of device 22 with respect to the multiple protocols. For example, data residing within module 48 may indicate that device 22 is only authorized to operate within a single process industry standard mode, such as HART. Ultimately, a different setting of that data within module 48 may indicate that device 22 is authorized to operate in accordance with two or more industry standard protocols- Module 44 is preferably inserted to a connector 50 on the main board and may in fact require slight disassembly of device 22, such as removing the battery pack to access port 50.

Although the present invention has been described with reference to preferred embodiments, workers skilled in the art will recognize that changes may be made in form and detail without departing from the scope of the invention.

## Claims

1. A method of loading a plurality of Device Descriptions into a handheld field maintenance tool, the method comprising:
generating a plurality of stand-alone Device Description binary files; and
transferring the plurality of stand-alone Device Description binary files to the handheld field maintenance tool.

2. The method of Claim 1, wherein transferring the plurality of stand-alone Device Description binary files includes wirelessly communicating the stand-alone Device Description binary files to the handheld field maintenance tool.

3. The method of Claim 2, wherein wirelessly communicating includes infrared transmission.

4. A method of loading a Device Description binary file into a handheld field maintenance tool, the method comprising:
transferring the Device Description binary file through an infrared port of the handheld field maintenance tool; and
storing the Device Description binary file in the handheld field maintenance tool.

5. A computer-readable medium within a handheld field maintenance tool, the computer readable medium containing a plurality of stand-alone Device Description binary files.

6. A data structure embodied within a handheld field maintenance tool, the data structure comprising:
a process device field indicative of a unique process device;
a Device Description stand-alone binary file field indicative of a stand-alone Device Description binary file stored within the handheld field maintenance tool; and
an indication providing a relationship between the process device field and the Device Description stand-alone binary file field.

7. The data structure of Claim 6, and further comprising a version field indicating a version of the Device Description stand-alone binary file.

8. The data structure of Claim 6 or Claim 7, wherein the process device field is indicative of a plurality of unique process devices.

9. The data structure of any of Claims 6 to 8, wherein the Device Description binary file field is indicative of a plurality of stand-alone Device Description binary files, one stand-alone Device Description binary file for each unique field device.

10. The data structure of any of Claims 6 to 9, further comprising an indication providing a relationship between each unique process device and its stand-alone Device Description binary files.

11. A computer-readable medium within a handheld field maintenance tool, the computer-readable medium containing the data structure of any of Claims 6 to 10.

12. A handheld field maintenance tool including the computer-readable medium of Claim 5 or Claim 11.
